# EUROPÄISCHE PATENTSCHRIFT

(11) **EP 2 162 974 B1**
(45) Veröffentlichungstag und Bekanntmachung des Hinweises auf die Patenterteilung: **18.06.2014**
(21) Anmeldenummer: 08774562.6
(22) Anmeldetag: 01.07.2008
(51) Int. Cl.: H02K 11/04

(54) **HALTEVORRICHTUNG FÜR IM INNEREN EINES ROTORKÖRPERS ANGEORDNETE ELEKTRISCHE BAUTEILE EINER ERREGERSCHALTUNG SOWIE ROTOR MIT EINER SOLCHEN HALTEVORRICHTUNG**
RETAINING DEVICE FOR ELECTRICAL COMPONENTS OF AN EXCITATION CIRCUIT ARRANGED INSIDE A ROTOR BODY AND ROTOR COMPRISING SAID RETAINING DEVICE
DISPOSITIF DE MAINTIEN POUR DES COMPOSANTS ÉLECTRIQUES D'UN CIRCUIT D'EXCITATION, MONTÉS À L'INTÉRIEUR D'UN CORPS DE ROTOR, ET ROTOR ÉQUIPÉ D'UN TEL DISPOSITIF DE MAINTIEN

(30) Priorität: 04.07.2007 DE 102007030969
(43) Veröffentlichungstag der Anmeldung: 17.03.2010
(73) Patentinhaber: Siemens Aktiengesellschaft, 80333 München (DE)
(72) Erfinder: CORDES, Ralf, 91058 Erlangen (DE); FISCHER, Walter, 84453 Mühldorf am Inn (DE); HUBER, Jürgen, 91058 Erlangen (DE)
(86) Internationale Anmeldenummer: PCT/EP2008/058412
(87) Internationale Veröffentlichungsnummer: WO 2009/003990

(56) Entgegenhaltungen:
- FR-A- 1 308 135
- GB-A- 1 017 026
- GB-A- 2 322 474

## Beschreibung

Die Erfindung betrifft eine Haltevorrichtung für im Innenraum des Rotorkörpers eines um eine Achse drehbar gelagerten Rotors anzuordnende elektrische Bauteile einer Erregerschaltung sowie einen Rotor mit einer solchen Haltevorrichtung.

Elektrische Maschinen weisen Erregerwicklungen auf, welche Teil des Rotors sind. Zur Erregung der Wicklung verfügen elektrische Maschinen über eine Erregerschaltung, die innerhalb des Rotors der elektrischen Maschine angeordnet ist. Derartige Erregerschaltungen weisen verschiedene elektrische Bauteile, insbesondere leistungselektronische Bauteile, auf.

Eine innerhalb des Rotors einer elektrischen Maschine angeordnete Erregerschaltung ist im Betrieb der elektrischen Maschine erheblichen mechanischen Belastungen ausgesetzt. Bei einer zweipoligen Synchronmaschine, die mit einer Netzfrequenz von 60 Hz betrieben wird, beträgt bei typischen Gehäusegrößen derartiger Maschinen beispielsweise die Zentripetalbeschleunigung, welche auf die elektrischen Bauteile einer innerhalb des Rotors der elektrischen Maschine angeordneten Erregerschaltung wirkt, mehrere 1000 G. Weiterhin ist eine innerhalb eines Rotors einer elektrischen Maschine angeordnete Erregerschaltung den typischerweise im Rotor auftretenden Vibrationen ausgesetzt.

Erregerschaltungen weisen weiterhin zum Teil komplexe Schaltkreise auf, die insbesondere leistungselektronische Bauteile wie beispielsweise IGBTs, MOSFETs, Thyristoren, Leistungsdioden, etc. umfassen. Derartige leistungselektronische Bauteile verursachen im Betrieb nicht zu vernachlässigende Verlustwärmemengen, die aus dem Bereich der Erregerschaltung abgeführt werden müssen.

Aus der FR 1308135 ist ein Aufbau bekannt, bei dem elektrische Bauteile einer Erregerschaltung in einem Rotor mit einer Haltevorrichtung angebracht werden. Die Haltevorrichtung erstreckt sich in Umfangsrichtung des Rotorkörpers auf dessen Innenseite und zumindest Teile ihrer radial äußeren Seite sind formschlüssig an den Rotorkörper angepasst. An ihrer radial inneren Seite weist sie Ausnehmungen zur Aufnahme der elektrischen Bauteile auf.

Aufgabe der vorliegenden Erfindung ist es, eine Haltevorrichtung für die elektronischen Bauteile einer Erregerschaltung anzugeben, welche hinsichtlich der im Stand der Technik bekannten Probleme verbessert ist. Insbesondere soll die erfindungsgemäße Haltevorrichtung in Bezug auf eine sichere mechanische Halterung der elektrischen Bauteile bei gleichzeitig guter Verlustwärmeabfuhr verbessert sein.

Die Aufgabe wird mit den in Anspruch 1 angegebenen Maßnahmen gelöst. Demgemäß wird eine Haltevorrichtung für im Innenraum des Rotorkörpers eines um eine Achse drehbar gelagerten Rotors anzuordnende elektrische Bauteile einer Erregerschaltung angegeben, wobei sich die Haltevorrichtung in Umfangsrichtung des Rotorkörpers auf dessen Innenseite erstreckt und zumindest Teile ihrer radial äußeren Seite formschlüssig an den Rotorkörper angepasst sind. Weiterhin weist die Haltevorrichtung an ihrer radial inneren Seite Ausnehmungen oder Abplattungen zur formschlüssigen Aufnahme der elektrischen Bauteile auf.

Mit der erfindungsgemäßen Haltevorrichtung können die elektrischen Bauteile einer Erregerschaltung vorteilhaft mechanisch stabil mit einem Rotorkörper verbunden werden, wobei gleichzeitig eine gute Verlustwärmeabfuhr von den elektrischen Bauteilen auf den Rotorkörper gewährleistet ist. Da sich die Haltevorrichtung auf der Innenseite des Rotorkörpers in Umfangsrichtung des Rotorkörpers erstreckt, können die elektrischen Bauteile räumlich nah zu der die Verlustwärme abführenden Außenseite des Rotorkörpers montiert werden. Wei terhin können die elektrischen Bauteile derart in dem Rotorkörper angeordnet werden, dass auf die elektrischen Bauteile wirkende Zentripetalbeschleunigungen von der Haltevorrichtung aufgenommen werden.

Vorteilhafte Ausgestaltungen der erfindungsgemäßen Haltevorrichtung gehen aus den von Anspruch 1 abhängigen Ansprüchen hervor. Dabei kann die Haltevorrichtung nach Anspruch 1 mit den Merkmalen eines oder insbesondere mit den Merkmalen mehrerer Unteransprüche kombiniert werden. Demgemäß kann die Haltevorrichtung nach der Erfindung noch die folgenden Merkmale aufweisen:
- Die elektrischen Bauteile können Leistungshalbleiter sein. Eine sichere mechanische Halterung bei gleichzeitig gewährleisteter sicherer Wärmeabfuhr ist für die Leistungshalbleiter einer Erregerschaltung besonders vorteilhaft.
- Die elektrischen Bauteile können Wärmeübergangsflächen aufweisen und weiterhin mit diesen Wärmeübergangsflächen großflächig in thermischem Kontakt mit den Ausnehmungen oder Abplattungen der Haltevorrichtung stehen. Die Ausnehmungen oder Abplattungen können weiterhin derart ausgerichtet sein, dass ihre Flächennormalen im Wesentlichen in radiale Richtung weisen. Eine großflächige thermische Ankopplung elektrischer Bauteile an die Haltevorrichtung gewährleistet einen guten thermischen Kontakt zwischen den elektrischen Bauteilen und der Haltevorrichtung. Indem die Ausnehmungen oder Abplattungen der Haltevorrichtung, von welchen die elektrischen Bauteile aufgenommen werden, derart ausgerichtet sind, dass ihre Flächennormalen im Wesentlichen in radiale Richtung weisen, wirken die an den elektrischen Bauteilen angreifenden Zentripetalbeschleunigungen im Wesentlichen in Richtung der Flächennormalen der Ausnehmungen oder Abplattungen. Die auf die elektrischen Bauteile wirkenden Kräfte werden folglich nicht zu einer Ablösung der elektrischen Bauteile von der Haltevorrichtung und somit zu einer Verschlechterung des thermischen Kontaktes zwischen den elektrischen Bauteilen und der Haltevorrichtung führen, sondern im Gegenteil eine Verbesserung des thermischen Kontaktes zwischen den elektrischen Bauteilen und der Haltevorrichtung bewirken.
- Die elektrischen Bauteile können mit der Haltevorrichtung verschraubt sein, alternativ durch Klammern mit der Haltevorrichtung verbunden sein. Eine Verbindung der elektrischen Bauteile mittels Schrauben oder Klammern mit der Haltevorrichtung erlaubt eine einfache und sichere Montage der elektrischen Bauteile an der Haltevorrichtung.
- Die Haltevorrichtung kann aus einem thermisch gut leitfähigen Material, insbesondere Kupfer, gefertigt sein. Ein thermisch gut leitfähiges Material wie beispielsweise Kupfer verbessert die thermische Ankopplung der elektrischen Bauteile an den Rotorkörper.
- Die Haltevorrichtung kann Teil des Rotorkörpers sein. Eine Ausgestaltung der Haltevorrichtung, so dass diese ein integrierter Bestandteil des Rotorkörpers ist, verbessert die mechanische und thermische Ankopplung der elektrischen Bauteile an den Rotorkörper.

Weiterhin erfindungsgemäß soll ein Rotor mit einer Haltevorrichtung gemäß einer der vorstehenden Ausführungsform angegeben werden. Insbesondere können dabei die Haltevorrichtung und die elektrischen Bauteile im Inneren des Rotorkörpers vergossen sein. Vorteilhaft kann durch einen Verguss der Haltevorrichtung sowie der elektrischen Bauteile im Inneren des Rotorkörpers die thermische und mechanische Anbindung der elektrischen Bauteile an den Rotorkörper verbessert werden.

Weitere vorteilhafte Ausgestaltungen der erfindungsgemäßen Haltevorrichtung sowie des erfindungsgemäßen Rotors gehen aus den vorstehend nicht angesprochenen Unteransprüchen sowie aus der nachfolgend erläuterten Zeichnung hervor.

Dabei zeigt deren Figur eine Haltevorrichtung für im Inneren des Rotorkörpers eines Rotors angeordnete elektrische Bauteile.

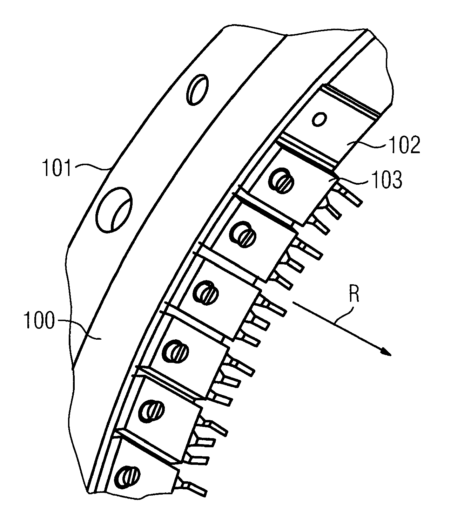

In der Figur ist ein Teil einer Haltevorrichtung 100 veranschaulicht, welche im Inneren eines Rotorkörpers 101 angeordnet ist. Der Rotorkörper 101 kann insbesondere um eine in der Figur nicht dargestellte Achse drehbar gelagert sein. Eine mit R bezeichnete Richtung weist zur nachfolgenden Verdeutlichung in Richtung der Drehachse des Rotorkörpers 101. Die Haltevorrichtung 100 dient insbesondere der Halterung elektrischer Bauteile 103 einer Erregerschaltung bzw. sonstigen Erregereinrichtung. Die Haltevorrichtung 100 ist in Umfangsrichtung des Rotorkörpers 101 auf ihrer radial äußeren Seite (also entgegen der in der Figur angedeuteten Richtung R) an die Form des Rotorkörpers 101 insbesondere formschlüssig zumindest in Teilen angepasst. Die Haltevorrichtung 100 kann weiterhin an unmittelbar mit dem Rotorkörper 101 verbundene, insbesondere mit dem Rotorkörper 101 thermisch verbundene, Bauteile formschlüssig angepasst sein. An ihrer radial inneren Seite (in Richtung R) weist die Haltevorrichtung 100 Ausnehmungen oder Abplattungen 102 zur formschlüssigen Aufnahme der elektrischen Bauteile 103 auf. Bei den elektrischen Bauteilen (103) kann es sich insbesondere um leistungselektronische Bauteile wie beispielsweise IGBTs, MOSFETs, Thyristoren, Leistungsdioden, etc., handeln.

Die elektrischen Bauteile 103 können Wärmeübergangsflächen aufweisen, mit welchen sie großflächig in thermischem Kontakt mit den Ausnehmungen oder Abplattungen 102 stehen. Die Ausnehmungen oder Abplattungen 102 sind weiterhin derart ausgerichtet, dass ihre Flächennormalen im Wesentlichen in Richtung R weisen.

In den elektrischen Bauteilen 103 anfallende Verlustwärme kann durch den großflächigen Kontakt der elektrischen Bauteile 103 mit den Ausnehmungen oder Abplattungen 102 an die Haltevorrichtung 100 abgegeben werden. Die Haltevorrichtung 100 steht weiterhin mit dem Rotorkörper 101 in formschlüssigem Kontakt, so dass die Verlustwärme im Wesentlichen ungehindert an den Rotorkörper 101 und damit nach außen abgegeben werden kann.

Auf die elektrischen Bauteile 103 infolge einer Drehung des Rotorkörpers 101 wirkende Zentripetalbeschleunigungen sind im Wesentlichen in Richtung der Flächennormalen der Ausnehmungen oder Abplattungen 102 gerichtet. Auf die elektrischen Bauteile 103 wirkende Kräfte infolge solcher Zentripetalbeschleunigungen können somit von der Haltevorrichtung 100 effektiv aufgenommen werden.

Die elektrischen Bauteile 103 können mit der Haltevorrichtung 100 verschraubt sein. Alternativ können die elektrischen Bauteile 103 mit Klammern mit der Haltevorrichtung 100 verbunden sein.

Die Haltevorrichtung 100 kann insbesondere aus einem thermisch gut leitfähigen Material wie beispielsweise Kupfer, Aluminium, Legierungen dieser Materialien, etc., gefertigt sein. Weiterhin kann die Haltevorrichtung 100 auch integrierter Teil des Rotorkörpers 101 selbst sein.

Die Haltevorrichtung 100 sowie die elektrischen Bauteile 103 können innerhalb des Rotorkörpers 101 mittels einer geeigneten Vergussmasse vergossen sein. Eine geeignete Vergussmasse ist beispielsweise aushärtbares Kunstharz. Durch den Verguss der Haltevorrichtung 100 und der elektrischen Bauteile 103 wird eine stabile mechanische Verbindung der Haltevorrichtung 100 und der elektrischen Bauteile 103 mit dem Rotorkörper 101 gewährleistet. Weiterhin werden die elektrischen Bauteile 103 vor im Bereich des Rotorkörpers 101 auftretenden, für die elektronischen Bauteile 103 schädlichen Einflüssen wie beispielsweise Staub, Feuchtigkeit, etc., geschützt.

## Patentansprüche

1. Rotor mit einer Haltevorrichtung (100) für im Innenraum des Rotorkörpers (101) eines um eine Achse drehbar gelagerten Rotors anzuordnende elektrische Bauteile (103) einer Erregerschaltung,
wobei die Haltevorrichtung (100)
- Sich in Umfangsrichtung des Rotorkörpers (101) auf dessen Innenseite erstreckt und zumindest Teile ihrer radial äußeren Seite formschlüssig an den Rotorkörper (101) angepasst sind, und
- an ihrer radial inneren Seite Ausnehmungen oder Abplattungen (102) zur formschlüssigen Aufnahme der elektrischen Bauteile (103) aufweist,
**dadurch gekennzeichnet, dass**
die elektrischen Bauteile (103) mit Klammern mit der Haltevorrichtung (100) verbunden sind und die Haltevorrichtung (100) und die elektrischen Bauteile (103) im Inneren des Rotorkörpers vergossen sind.

2. Rotor nach Anspruch 1, **gekennzeichnet durch** Leistungshalbleiter als elektrische Bauteile (103).

3. Rotor nach Anspruch 1 oder 2, **dadurch gekennzeichnet, dass** die elektrischen Bauteile (103) Wärmeübergangsflächen aufweisen, die großflächig in thermischem Kontakt mit den Ausnehmungen oder Abplattungen (102) stehen, wobei die Ausnehmungen oder Abplattungen (102) derart ausgerichtet sind, dass ihre Flächennormalen im Wesentlichen in radiale Richtung (R) weisen.

4. Rotor nach einem der vorhergehenden Ansprüche, **gekennzeichnet durch** ein thermisch gut leitfähiges Material, insbesondere Kupfer oder Aluminium.

5. Rotor nach einem der vorhergehenden Ansprüche, **dadurch gekennzeichnet, dass** die Haltevorrichtung (100) Teil des Rotorkörpers (101) ist.

## Claims

1. Rotor having a holding apparatus (100) for electrical components (103) of a field circuit which can be arranged in the interior of the rotor body (101) of a rotor which is mounted such that it can rotate about an axis, wherein the holding apparatus (100)
- extends in the circumferential direction of the rotor body (101) on the inside thereof, and at least parts of its radially outer face are matched in an interlocking manner to the rotor body (101), and
- on its radially inner face, has recesses or flattened areas (102) for interlocking accommodation of the electrical components (103),
**characterized in that** the electrical components (103) are connected to the holding apparatus (100) by brackets and the holding apparatus (100) and the electrical components (103) are encapsulated in the interior of the rotor body.

2. Rotor according to Claim 1, **characterized by** power semiconductors as electrical components (103).

3. Rotor according to Claim 1 or 2, **characterized in that** the electrical components (103) have heat transfer surfaces which make thermal contact over a large area with the recesses or flattened areas (102), wherein the recesses or flattened areas (102) are aligned such that their surface normals point essentially in the radial direction (R).

4. Rotor according to one of the preceding claims, **characterized by** a thermally highly conductive material, in particular copper or aluminum.

5. Rotor according to one of the preceding claims, **characterized in that** the holding apparatus (100) is part of the rotor body (101).

## Revendications

1. Rotor ayant un dispositif (100) de maintien de composants (103) électriques d'un circuit d'excitation, à disposer à l'intérieur du corps (1) d'un rotor monté tournant autour d'un axe,
dans lequel le dispositif (100) de maintien
- s'étend dans la direction périphérique du corps (101) du rotor sur la face intérieure de celui-ci et au moins des parties de ses faces extérieures radialement sont adaptées à complémentarité de forme au corps (10) du rotor, et
- a sur sa face intérieure radialement des évidements ou des méplats (102) pour la réception à complémentarité de forme des composants (103) électriques,
**caractérisé en ce que**
les composants (103) électriques sont reliés au dispositif (100) de maintien par des crampons et le dispositif (100) de maintien et les composants (103) électriques sont scellés à l'intérieur du corps du rotor.

2. Rotor suivant la revendication 1, **caractérisé par** des semiconducteurs de puissance comme composants (103) électriques.

3. Rotor suivant la revendication 1 ou 2, **caractérisé en ce que** les composants (103) électriques ont des surfaces de transmission de la chaleur, qui sont en contact thermique suivant une grande surface avec les évidements ou avec les méplats (102), les évidements ou les méplats (102) étant dirigés de manière à ce que leur normale à la surface soit sensiblement dans la direction (R) radiale.

4. Rotor suivant l'une des revendications précédentes, **caractérisé par** un matériau bon conducteur thermiquement, notamment du cuivre ou de l'aluminium.

5. Rotor suivant l'une des revendications précédentes, **caractérisé en ce que** le dispositif (100) de maintien fait partie du corps (101) du rotor.
